Europäisches Patentamt

European Patent Office

Office européen des brevets

(19)

(11) Numéro de publication: **0 165 890**
**B1**

(12) **FASCICULE DE BREVET EUROPÉEN**

(45) Date de publication du fascicule du brevet:
**27.04.88**

(21) Numéro de dépôt: **85450013.9**

(22) Date de dépôt: **21.05.85**

(51) Int. Cl.⁴: **A 41 H 3/00,** A 41 H 43/00,
B 25 H 7/02

(54) Procédé et dispositif de placement interactif sur un support de profils à des fins de traçage et/ou de découpe.

(30) Priorité: **22.05.84 FR 8408098**

(43) Date de publication de la demande:
**27.12.85 Bulletin 85/52**

(45) Mention de la délivrance du brevet:
**27.04.88 Bulletin 88/17**

(84) Etats contractants désignés:
**AT BE CH DE GB IT LI LU NL SE**

(56) Documents cité:
**WO-A-82/04266**
**FR-A-2 535 086**
**US-A-3 596 068**
**US-A-4 112 797**
**US-A-4 124 285**
**US-A-4 178 820**

**MANUFACTURING CLOTHIER, vol. 61, no. 4, avril
1980, pages 53,55, Londres, GB; M. DISHER:
"Computer-aided grading for small companies"**

(73) Titulaire: **Etablissements G. Imbert, F-47800
Miramont de Guyenne (FR)**

(72) Inventeur: **Bonnet, Pierre, La Brice, F-47800
Miramont De Guyenne (FR)**
Inventeur: **Villaret, Rémy, 61 Rue du Moulin,
F-47800 Miramont de Guyenne (FR)**

(74) Mandataire: **Thébault, Jean- Louis, Cabinet Jean-
Louis Thébault 50, Cours de Verdun, F-33000
Bordeaux (FR)**

## Description

La présente invention a trait à un procédé de placement interactif de profils quelconques sur un support donné constitué en un matériau quelconque en feuille, plaque, film, en une ou plusieurs couches, en vue de tracer sur le support et/ou de découper dans celui-ci le contour desdits profils, en disposant ces derniers sur le support avec le moins de perte possible de matière tout en tenant compte d'éventuels paramètres par exemple inhérents à la nature du matériau, ou à la destination des pièces tracées et/ou découpées.

L'invention s'applique plus particulièrement à la découpe de patrons dans l'industrie du cuir, notamment l'industrie de la chaussure, mais peut tout aussi bien trouver son application dans tous autres domaines dans lesquels se pose le problème du placement optimal de profils variés et plus ou moins compliqués sur un support quelconque en vue du traçage et/ou de la découpe desdits profils.

Dans le domaine de la chaussure la découpe de pièces ayant un profil complexe est réalisée principalement à l'aide d'emporte-pièce. Cette solution permet à l'opérateur de rester maître dans le placement de son outil sur la peau à découper mais est onéreuse pour des petites séries et allonge les temps de réponse de l'entreprise à cause des délais de réalisation de l'outillage.

Depuis quelques années des technologies nouvelles sont apparues dans la découpe des peaux et tendent à remplacer l'emporte-pièce.

C'est ainsi que deux nouveaux moyens de découpe au rayon laser et au jet de fluide ont été mis au point et présentent maintenant, asservis à des moyens informatiques, une flexibilité totale en permettant à une entreprise de maîtriser en un temps très court la diversité de sa découpe et/ou de son traçage.

Cependant le système de placement sur la peau des formes à découper devient alors complexe et onéreux, et n'a pas encore été résolu avec satisfaction.

Selon une première technique de placement connue, une peau-témoin est recouverte manuellement par le coupeur de plusieurs gabarits en papier ou carton. Une fois la peau ainsi tapissée, elle est "scannée" et mémorisée dans un ordinateur qui, ensuite, commandera la découpe des peaux en fonction des informations mémorisées. Un tel procédé est long, peu pratique et nécessite la préparation de gabarits.

Suivant une autre technique plus sophistiquée et automatisée, un ordinateur prend en compte chaque peau à découper en fonction des défauts et organise dans la surface utile le positionnement des divers patrons qu'on lui a mis en mémoire préalablement, puis commande la découpe de la peau.

Malheureusement un tel système, complexe et coûteux, n'a jamais pu être mené jusqu'à un stade opérationnel et fiable et est inutilisable industriellement.

Suivant encore une autre technique illustrée par le document US-A-4 178 820, un opérateur appelle différents profils préalablement mémorisés et les positionne mutuellement sur un écran d'affichage. Lorsque le disposition des profils lui convient, il la mémorise en vue de la découpe ultérieure de l'agencement ainsi mémorisé dans un matérieu en feuille (tissu, peau, plastique, caoutchouc, papier, etc...).

Il ne s'agit pas d'un placement sur le matériau à découper. C'est très important dans le domaine du cuir où il faut tenir compte des défauts inévitables, du sens de la peau et de se forme.

Si le précédé décrit dans ce document convient à un matérieu à découper de dimensions standards bien définies et facilement contrôlables et homogène, c'est-à-dire ne présentant pas de défauts en des endroits aléatoires, il s'applique mal aux peaux du fait desdits défauts, sens et forme de la peau.

Il est à noter egalement que dans ce procédé le placement des profils et la découpe sont deux opérations totalement dissociées ou dissociables dans le temps et dans l'espace.

Enfin, le document WO-A-8 204 266 concerne une technique de decoupe de pièces en cuir qui présente également divers inconvénients. En effet, dans ce document, après le placement manuel des gabarits sur la peau, il est nécesseire d'utiliser une table de digitalisation pour entrer dans l'ordinateur la position de chaque gabarit. De plus, le découpe de la peau ne se fait pas dans la foulée mais ultérieurement et nécessite la reprise de la peau, après le placement, et sa mise en place sur une table de découpe.

Le but de l'invention est d'éliminer les inconvénients des techniques connues et de proposer un système de placement fiable, rapide et peu coûteux et susceptible d'être associé aux systèmes informatisés modernes de découpe au laser ou au jet d'eau notemment.

A cet effet, l'invention a pour objet un procédé de placement interactif sur un support de profils à des fins de traçage et/ou de découpe, caractérisé en ce qu'il consiste à stocker dans un ensemble calculateur les coordonnées de divers gabarits, formes, patronages à découper, à projeter directement ou indirectement sur la surface dudit support après mise en place de ce dernier sur une table de traçage ou de découpe, à l'aide d'un dispositif de vidéoprojection approprié, une ou plusieurs images desdits gabarits, formes ou patronages mémorisés, à positionner à volonté sur la surface du support la ou les images, puis, une fois le positionnement optimal obtenu, à mémoriser les données d'emplacement desdites images et à commander à partir de ces données le traçage sur le support et/ou sa découpe.

Un tel procédé apporte une solution simple et bon marché au placement d'un profil quelconque devant être découpé par des moyens basés sur les technologies nouvelles évoquées plus haut. Il permet, en outre, des gains de temps substantiels du fait que le support est placé directement sur la table de traçage ou de découpe en vue du placement des profils puis, immédiatement après, du traçage et/ou de la découpe, sans avoir à déplacer et repositionner le support, celui-ci étant déjà en place pour le traçage et/ou la découpe.

Il s'applique aussi bien à la découpe d'une peau ou d'une matière en feuille ou film unique, qu'à la découpe en matelas.

Quant à la projection desdites images sur le support, elle peut se faire directement à l'aide d'un vidéoprojecteur du commerce associé audit ensemble calculateur, ou indirectement à l'aide d'un écran graphique associé à l'ensemble calculateur et d'un dispositif de rétroprojection optique interpose entre ledit écran et le support.

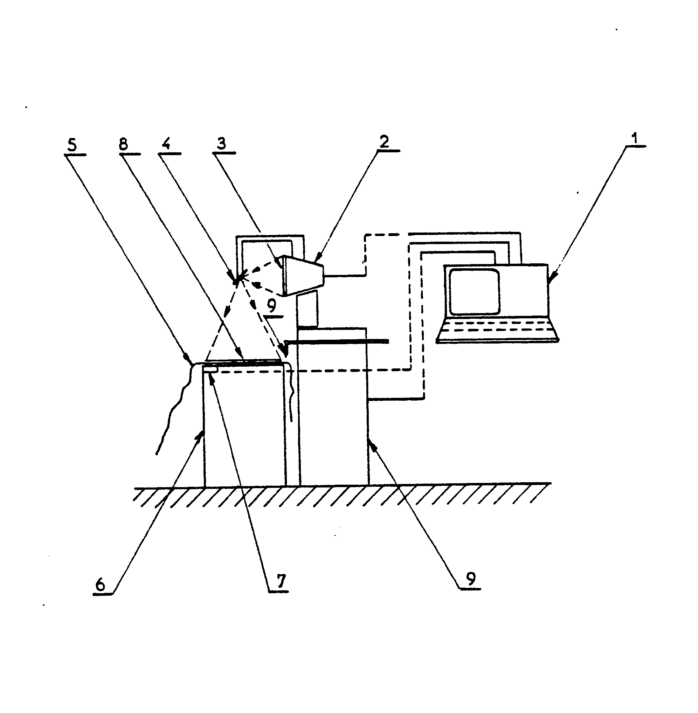

L'invention a également pour objet un dispositif pour la mise en oeuvre du procédé ci-dessus, que l'on va maintenant décrire en détails en se reportant à la figure unique annexée sur laquelle est représenté schématiquement l'agencement des organes essentiels d'un dispositif conforme à l'invention utilisant un système de rétroprojection optique.

Sur cette figure unique on a représenté en 1 un ensemble calculateur relié à une console 2 de visualisation dont l'image de l'écran symbolisé en 3 est rétroprojetée à l'aide d'un système optique approprié 4 sur la surface d'un support à découper 5, par exemple une peau placée sur une table de découpe 6 et maintenue par exemple par un dispositif d'aspiration plaquant la peau contre la table à la manière bien connue.

Le calculateur 1 est également connecté à un dispositif 7 de commande d'affichage et de déplacement à volonté sur l'écran 3 d'une ou plusieurs images représentant des gabarits, formes ou patronages préalablement mémorisés dans le calculateur.

Ce dispositif 7, placé à proximité immédiate du plan de travail de la table de découpe 6, est par exemple une "souris", une manette ou un "crayon électronique". Un tel dispositif est parfaitement connu et couramment utilisé et n'a pas besoin d'être décrit plus en détail.

Les divers gabarits, formes ou patronages à découper sont par exemple stockés sous forme de coordonnées numériques bi-dimensionnelles sur un support magnétique. Il peut s'agir d'un support magnétique provenant d'un système amont de conception assistée par ordinateur. Les programmes de lancement (donnant le nombre et le type de pièce à découper) sont également stockés sur un support magnétique qui peut provenir d'un système central d'ordonnancement/lancement. Ces diverses informations sont chargées au préalable dans l'ensemble calculateur 1.

Le coupeur appelle les différentes pièces qu'il doit découper dans la peau 5. L'image de chaque pièce est affichée une à une sur l'écran graphique 3, et rétroprojetée par le système optique 4, par exemple un simple miroir plan, sur le support 5 à l'intérieur d'une surface 8 correspondant aux dimensions de l'écran 3.

Le coupeur observe à l'intérieur de la surface 8 l'image rétroprojetée par le système optique 4 et, à l'aide de la commande 7 place ladite image de manière optimale sur la peau 5 en fonction du sens de celle-ci et en évitant les défauts exactement comme il le ferait avec un emporte-pièce. Une fois le placement optimal obtenu, le coupeur commande la validation ou enregistrement par le calculateur dudit placement optimal de l'image considérée, puis la découpe de la peau 5 suivant le contour validé, à l'aide par exemple d'un système automatique de découpe symbolisé en 9, à laser ou à jet d'eau, connecté à l'ensemble calculateur 1 et associé à la table 6.

La surface 8 correspond bien entendu à la surface ou plan de travail de l'organe de coupe du système 9. L'ensemble calculateur 1 est programmé pour faire correspondre la position dudit organe de coupe à l'intérieur de ladite surface de travail, à la position, sur l'écran graphique 3, d'une image d'une pièce quelconque disposée de manière quelconque. Ainsi, l'organe de coupe découpe la peau 5 suivant des tracés correspondant rigoureusement à l'agencement sur l'écran des images visualisées et à la projection de cet agencement sur la peau.

Quand la découpe est terminée, l'organe de coupe du système 9 se retire et le coupeur peut appeler une nouvelle image sur l'écran 3.

Pour accélérer les opérations on peut placer plusieurs images côte-à-côte dans les limites de la surface 8 et en déclencher la découpe que lorsque plusieurs images sont en place.

De préférence l'écran 3 sera le plus plat possible afin d'avoir la meilleure définition possible des images rétroprojetées en 8. Par ailleurs, plus la luminosité de l'écran 3 sera forte et plus on pourra agrandir l'image de l'écran 3 sur la peau 5.

On pourra ainsi doubler (voire davantage) la surface totale de découpe rétroprojetée (surface 8) et donc placer sur la peau des images qui dans leurs dimensions réelles ne pourraient pas être contenues dans les dimensions de l'écran 3.

Si nécessaire on peut placer sur le bloc optique 4 un filtre de couleur afin d'augmenter le contraste de couleur sur la peau 5.

Une seule peau ou bien plusieurs en matelas peuvent être découpées en une seule passe sur la table 6.

Les variations d'épaisseur d'une peau à l'autre entraînent des variations de la distance entre l'image projetée en 8 et le système optique 4, mais ces variations ne sont pas sensibles au niveau de la précision de la découpe par rapport au placement manuel réalisé.

Dans le cas d'un matelas et dans le but d'avoir sur la peau 5 en place sur la table 6 une image de l'écran 3 de dimensions constantes, on peut, soit prévoir une table 6 reglable en position verticalement par rapport au système optique 4, soit associer à ce dernier une optique complémentaire projetant en rayons parallèles l'image de l'écran 3 sur le plan de travail de la table 6.

Suivant une variante, la rétroprojection des images sur le support peut être faite directement à l'aide d'un vidéoprojecteur qui permet d'éliminer le système optique 4. Un tel appareil est parfaitement connu et n'a pas besoin d'être décrit en détail. Il se substitue purement et simplement à la console de visualisation 2, est relié au calculateur 1 et forme directement sur la surface de la peau 5 disposée à la manière d'un écran devant le vidéoprojecteur, une image lumineuse de haute définition que le coupeur observe et place à volonté exactement comme dans le dispositif représenté sur le dessin.

Le procédé de l'invention apporte ainsi une solution simple, bon marché et très pratique d'emploi, au placement de profils quelconques devant être découpés notamment à l'aide des systèmes nouveaux à rayon laser ou jet d'eau, commandés par ordinateur, ledit procédé ayant recours à ce dernier en supprimant toute phase intermédiaire de réalisation de gabarits.

L'invention s'applique notamment à l'industrie du cuir et du textile mais peut s'appliquer d'une manière générale au traçage et/ou la découpe de contours ou formes quelconques sur un ou plusieurs supports constitués par une feuille, un film, une nappe textile, une plaque, en matériau quelconque souple, semi-rigide ou rigide.

## Revendications

1. Procédé de placement interactif sur un support (5) de profils à des fins de traçage et/ou de découpe, caractérisé en ce qu'il consiste à stocker dans la mémoire d'un ensemble calculateur (1) les coordonnées de divers gabarits, formes, patronages à découper, à projeter directement ou indirectement sur la surface (8) dudit support, après mise en place de ce dernier sur une table de traçage ou de découpe, à l'aide d'un dispositif de vidéoprojection approprié (2 à 4), une ou plusieurs images desdits gabarits, formes ou patronages mémorisés, lesdites images étant élaborées par l'ensemble calculateur, appelées sur le dispositif de vidéoprojection et positionnées à volonté sur la surface du support à l'aide d'un dispositif de commande dudit ensemble calculateur, puis, une fois le positionnement optimal obtenu, à mémoriser les données d'emplacement desdites images et à commander à partir de ces données le traçage sur le support et/ou sa découpe.

2. Dispositif pour la mise en oeuvre du procédé suivant la revendication 1, caractérisé en ce qu'il comprend un ensemble calculateur (1) relié à un dispositif de projection d'images de gabarits, formes ou patronages préalablement mémorisés dans ledit calculateur (1), sur la surface d'un support (5) placé sur une table (6) de traçage ou découpe, un dispositif (7) du type "souris",

"crayon électronique" ou analogue, relié audit calculateur et destiné à appeler et positionner sur ledit dispositif de projection lesdites images et des moyens (9) de traçage ou découpe dudit support à commande informatisée, reliés à l'ensemble calculateur.

3. Dispositif suivant la revendication 2, caractérisé en ce que ledit dispositif de projection est constitué par un écran graphique (3) connecté audit ensemble calculateur (1) et par un système optique (4) de rétroprojection interposé entre l'écran graphique (3) et la surface du support (5).

4. Dispositif suivant la revendication 3, caractérisé en ce que ledit système de rétroprojection est un miroir optique (4) éventuellement muni d'un filtre de couleur amovible.

5. Dispositif suivant la revendication 2, caractérisé en ce que le dispositif de projection est un vidéo-projecteur formant lesdites images directement sur le support (5) agencé à la manière d'un écran.

6. Dispositif suivant l'une des revendications 2 à 5, caractérisé en ce qu'il est associé à un système de découpe à laser ou à jet d'eau (9) commandé par ledit ensemble calculateur (1) et dont la table de travail (6) reçoit directement le support à découper (5).

## Patentansprüche

1. Verfahren zum Anordnen, das auf eine Profilauflage (5) zum Anreißen und/oder Schneiden einwirkt, dadurch gekennzeichnet, daß es darin besteht, in einem Speicher einer Rechnereinheit (1) die Koordinaten von verschiedenen zu schneidenden Muttermodellen, Formen, Schablonen zu speichern, direkt oder indirekt auf die Fläche (8) der besagten Auflage nach Anordnung der letzteren auf einem Anreiß- oder Schneidtisch mit Hilfe einer geeigneten Videoprojektionseinrichtung (2 bis 4) ein oder mehrere Bilder der besagten gespeicherten Muttermodelle, Formen oder Schablonen zu projizieren, wobei die besagten Bilder durch die Rechnereinheit verarbeitet, an die Videoprojektioneinrichtung gegeben und auf der Fläche der Auflage mit Hilfe einer Steuereinrichtung der besagten Rechnereinheit in gewünschter Weise positioniert werden, dann, wenn einmal die optimale Positionierung erhalten wurde, die Standortdaten der besagten Bilder zu speichern und aus diesen Daten das Anreißen auf der Auflage und/oder ihren Schnittvorgang zu steuern.

2. Vorrichtung zur Durchführung des Verfahrens nach Anspruch 1, dadurch gekennzeichnet, daß sie eine Rechnereinheit (1), die mit einer Projektionseinrichtung für Bilder von vorher in dem besagten Rechner (1) gespeicherten Muttermodellen, Formen oder Schablonen auf der Oberfläche einer auf einem Anreiß- oder Schneidtisch (5) angeordneten Auflage (5) verbunden ist, eine Einrichtung (7) vom Typ einer "Maus", eines "elektronischen Schreibstiftes" o. dgl., die mit dem besagten Rechner verbunden und dazu bestimmt ist, an die besagte Projektionseinrichtung die besagten Bilder anzulegen und zu positionieren, und mit der Rechnereinheit verbundene Mittel (9) zum Anreißen oder Schneiden der besagten Auflage gemäß informierter Steuerung umfaßt.

3. Vorrichtung nach Anspruch 2, dadurch gekennzeichnet, daß die besagte Projektionseinrichtung von einem Graphikbildschirm (3), die mit der besagten Rechnereinheit (1) gekoppelt ist, und einem optischen Retroprojektionssystem (4) gebildet wird, das zwischen dem Graphikbildschirm (3) und der Oberfläche der Auflage (5) angeordnet ist.

4. Vorrichtung nach Anspruch 3, dadurch gekennzeichnet, daß das besagte Retroprojektionssystem ein optischer Spiegel (4), gegebenenfalls mit einem abnehmbaren Farbfilter versehen, ist.

5. Vorrichtung nach Anspruch 2, dadurch gekennzeichnet, daß die Projektionseinrichtung ein Videoprojektor ist, der die besagten Bilder direkt auf der in der Art einer Leinwand angeordneten Auflage (5) erzeugt.

6. Vorrichtung nach einem der Ansprüche 2 bis 5, dadurch gekennzeichnet, daß sie mit einem Laser- oder Wasserstrahlschneidsystem (9) gekoppelt ist, das durch die Rechnereinheit (1) gesteuert wird und dessen Arbeitstisch (6) direkt die zu schneidende Auflage (5) aufnimmt.

**Claims**

1. A procedure for the interactive placement of outlines on a base (5) with the aim of tracing and/or cutting out, characterized in that it consists of storing in the memory of a computer unit (1) the coordinates of various templates, shapes and patterns to be cut out, of projecting directly or indirectly onto the surface (8) of the said base, after putting the latter into place on a tracing or cutting-out table, wich the aid of an appropriate video-projection device (2 to 4), one or more images of the said templates, shapes or patterns put into the memory, the said images being processed by the computer unit, called up on the video-projection device, and positioned at will on the surface of the base with the aid of a control device of the said computer unit, then, once the optimum positioning is obtained, of putting into the memory the position data of the said images and in controlling the tracing on the base and/or its cutting out starting from these data.

2. A device for putting the procedure in accordance with Claim 1 into effect, characterized in that comprises a computer unit (1) connected to a device for projecting images of templates, shapes or patterns, previously put into the memory of the said computer (1) on the surface of a base (5) placed on a tracing or cutting out table (6), a device (7) of the "mouse" or "electronic pencil" type or the like, connected to the said computer and intended to call up and position on the said projection device the said images and means (9) for tracing or cutting out of the said base which is computer controlled, connected to the computer unit.

3. A device according to Claim 2, characterized in that the said projection device is constituted by a graphic screen (3) connected to the said computer unit (1) and by an optical retro-projection system (4) interposed between the graphic screen (3) and the surface of the base (5).

4. A device according to claim 3, characterized in that the said retro-projection device is an optical mirror (4) optionally prowided with a removable colour filter.

5. A device according to Claim 2, characterized in that the projection device is a video projector forming the said images directly on the base (5) arranged in the manner of a screen.

6. A device according to any one of Claims 2 to 5, characterized in that it is associated with a laser or water jet cutting out system (9) controlled by the said computer unit (1) and the working table (6) of which receives directly the base (5) to be cut out.